# EUROPÄISCHE PATENTSCHRIFT

(11) **EP 4 257 933 B1**
(45) Veröffentlichungstag und Bekanntmachung des Hinweises auf die Patenterteilung: **12.11.2025**
(21) Anmeldenummer: 23165953.3
(22) Anmeldetag: 31.03.2023
(51) Int. Cl.: G01F 1/58, G01F 1/84

(54) **SPULENANORDNUNG FÜR EIN DURCHFLUSSMESSGERÄT UND VERFAHREN ZUM HERSTELLEN EINER SPULENANORDNUNG**
COIL ARRANGEMENT FOR A FLOW METER AND METHOD FOR PRODUCING A COIL ARRANGEMENT
ENSEMBLE BOBINE POUR UN DÉBITMÈTRE ET PROCÉDÉ DE FABRICATION D'UN ENSEMBLE BOBINE

(30) Priorität: 07.04.2022 DE 202022108431 U
(43) Veröffentlichungstag der Anmeldung: 11.10.2023
(73) Patentinhaber: Krohne AG, 4019 Basel (CH)
(72) Erfinder: Wanstall, Alex, Northampton, NN2 8AJ (GB); Blackmore, James, Wollaston, NN29 7RP (GB)
(74) Vertreter: Gesthuysen Patentanwälte

(56) Entgegenhaltungen:
- WO-A1-2022/031328
- DE-A1- 102017 207 663
- ANONYMOUS: "3D-Druck", WIKIPEDIA, 26 January 2017 (2017-01-26), pages 1 - 9, XP055579281, Retrieved from the Internet <URL:https://de.wikipedia.org/w/index.php?title=3D-Druck&oldid=162016514> [retrieved on 20190409]

## Beschreibung

Die Erfindung betrifft eine Spulenanordnung für ein Durchflussmessgerät, insbesondere für ein Coriolis-Durchflussmessgerät oder für ein magnetisch-induktives Durchflussmessgerät, mit einer Spule, wobei die Spule einen Spulenkörper aufweist und wenigstens eine Spulenwindung aus einem elektrisch leitfähigen Material aufweist, wobei der Spulenkörper aus einem keramischen Material gefertigt ist und wobei der Spulenkörper mittels eines additiven Fertigungsverfahrens hergestellt ist. Zudem betrifft die Erfindung ein Verfahren zum Herstellen einer solchen Spulenanordnung.

Spulenanordnungen sind unverzichtbare Bestandteile von insbesondere Coriolis-Durchflussmessgeräten und magnetisch-induktiven Durchflussmessgeräten. Bei Coriolis-Durchflussmessgeräten werden Spulenanordnungen beispielsweise als Aktoren verwendet, um die Messrohre zu Schwingungen anzuregen. Bei magnetisch-induktiven Durchflussmessgeräten werden Spulenanordnungen zur Erzeugung eines das Messrohr durchsetzenden Magnetfeldes benötigt.

Aus dem Stand der Technik sind eine Vielzahl von Spulenanordnungen bekannt. Die Spulenanordnungen weisen in der Regel einen Spulenkörper auf, auf dem zumindest eine, regelmäßig jedoch mehrere Spulenwindungen aus einem elektrisch leitfähigen Material aufgewickelt sind. Die Spulenwindungen werden mit Strom durchflossen. Sofern mehrere Spulenwindungen vorhanden sind, sind diese elektrisch voneinander isoliert, um einen Kurzschluss in der Spulenanordnung zu verhindern. In der Regel wird für die Spulenwindungen ein Kupferdraht verwendet. Aus dem Stand der Technik ist bekannt, die Spulenkörper aus unterschiedlichen Materialien herzustellen. Beispielsweise können diese aus einem Kunststoff realisiert sein. Insbesondere jedoch für Hochtemperaturanwendungen bieten sich Spulenkörper aus Keramiken an. Keramiken sind wesentlich temperaturunempfindlicher als Kunststoffe, sodass auch Messumgebungen mit mehr als 400°C kein Problem für die Spulenkörper darstellen. Zudem bieten sich Keramiken aufgrund ihrer elektrischen Isolationsfähigkeit an.

Aus dem Stand der Technik ist es bekannt, keramische Spulenkörper mittels eines Spritzgussverfahrens herzustellen. Hierzu wird eine flüssige Keramik in eine entsprechende Gussform eingegossen und ausgehärtet. Nachteilig hieran ist, dass die Form des Spulenkörpers, insbesondere die Konturenfeinheit des Spulenkörpers, abhängig ist von der Beschaffenheit der Gussform. Zudem ist ein solches Spritzgussverfahren aufwendig.

Aus der WO 2022/031328 A1 ist eine Spulenanordnung für ein Coriolis-Durchflussmessgerät mit einem Spulenkörper und Spulenwindungen bekannt, wobei der Spulenkörper entweder mittels eines mechanischen Fertigungsverfahrens, Gießens oder eines additiven Fertigungsverfahrens hergestellt. Zudem kann der Spulenkörper aus einem Kunststoff, einer Keramik oder einem anderen elektrisch isolierenden Material hergestellt sein.

Aus der DE 10 2017 207 663 A1 ist eine Spulenanordnung mit zwei Teilspulen bekannt. Eine der beiden Teilspulen ist eine Leiterspule aus einem elektrisch leitenden Material, die andere Teilspule ist eine Isolationsspule, die entweder aus elektrisch nicht leitfähigem Material oder aus elektrisch leitfähigem, jedoch nach außen mit einer elektrisch isolierenden Schicht beschichteten Material hergestellt ist. Die beiden Teilspulen werden im Wesentlichen mit gleicher Windungszahl gefertigt und zur Fertigung der Spule ineinander verdreht, derart, dass sich die Windungen der Teilspulen jeweils abwechselnd anordnen.

Der Erfindung liegt entsprechend die Aufgabe zugrunde, eine Spulenanordnung anzugeben, die gegenüber den aus dem Stand der Technik bekannten Spulenanordnungen vorteilhaft ausgebildet ist. Ebenfalls liegt der Erfindung die Aufgabe zugrunde, ein gegenüber dem Stand der Technik vereinfachteres Verfahren zum Herstellen einer Spulenanordnung bereitzustellen.

Die Aufgabe ist bei der erfindungsgemäßen Spulenanordnung zunächst und im Wesentlichen dadurch gelöst, nämlich mit den Merkmalen des Kennzeichnungsteils des Patentanspruchs 1, dass der Spulenkörper in seinem von den S.

Es ist erkannt worden, dass mittels additiver Fertigungsverfahren realisierte keramische Spulenkörper erhebliche Vorteile gegenüber aus dem Stand der Technik bekannten keramischen Spulenkörpern aufweisen. Additive Fertigungsverfahren ermöglichen eine deutlich filigranere Realisierung einer Struktur, als dies Spritzgussverfahren tun. Entsprechend können die Spulenkörper der erfindungsgemäßen Spulenanordnungen eine deutlich feinere Struktur aufweisen als die aus dem Stand der Technik bekannten Spulenkörper. Die Spulenkörper erfindungsgemäßer Spulenanordnungen sind zudem aufgrund der verwendeten Keramik für Hochtemperaturanwendungen geeignet.

Besonders bevorzugt ist das additive Fertigungsverfahren durch Stereolithografie, Sintherlithografie oder ein weiteres aus dem Stand der Technik bekanntes 3D-Druckverfahren realisiert.

Durch die additive Fertigung können ohne Weiteres verschiedene Strukturen insbesondere im Inneren des Spulenkörpers realisiert werden. Die erfindungsgemäße Spulenanordnung ist dadurch gekennzeichnet, dass der Spulenkörper in seinem von den Spulenkörperwänden begrenzten Inneren zumindest teilweise hohl ausgebildet ist. Dies ist in einer Variante dadurch realisiert, dass das Material im Inneren des Spulenkörpers zumindest teilweise in einer unregelmäßigen Struktur angeordnet ist. In einer weiteren Variante ist das Material im Inneren des Spulenkörpers zumindest teilweise in einer regelmäßigen Struktur angeordnet. Insbesondere kann der Spulenkörper auch Bereiche aufweisen, in denen das Material in einer unregelmäßigen Struktur angeordnet ist und weitere Bereiche aufweisen, in denen das Material in einer regelmäßigen Struktur angeordnet ist.

Wenn die Rede von einer unregelmäßigen Struktur ist, dann ist damit gemeint, dass die Struktur keine Periodizität aufweist und auch keine Ordnung in der Struktur zu finden ist. Ein Beispiel für eine unregelmäßige Struktur ist eine schwammartige oder poröse Struktur. Das Material des Spulenkörpers kann also beispielsweise eine vorgegebene Porosität aufweisen. Das Material kann hierbei eine offene Porosität aufweisen, also Hohlräume aufweisen, die miteinander in Verbindung stehen. Das Material kann aber beispielsweise auch eine geschlossene Porosität aufweisen, also Hohlräume, die nicht miteinander in Verbindung stehen. Das Material kann auch gleichzeitig Bereiche mit offener und Bereiche mit geschlossener Porosität aufweisen. Insgesamt sind die Hohlräume in dem Material zufällig bzw. statistisch verteilt, sodass eine unregelmäßige Struktur vorliegt.

Wenn die Rede von einer regelmäßigen Struktur die Rede ist, dann ist damit gemeint, dass in der Struktur eine Ordnung zu finden ist, insbesondere dass die Struktur eine Periodizität aufweist. Eine regelmäßige Struktur kann beispielsweise durch die Aneinanderreihung von Polyedern realisiert werden. Beispielsweise kann also eine regelmäßige Struktur durch die Aneinanderreihung von Würfeln oder durch die Aneinanderreihung von Pyramiden oder Prismen realisiert werden. Denkbar ist jedes Polyeder, das sich lückenlos aneinanderreihen lässt und somit eine vollständige Raumfüllung realisiert. Insbesondere können auch mehrere verschiedene Raumkörper verwendet werden. Bevorzugt sind die Polyeder von innen hohl. Eine weitere regelmäßige Struktur kann dadurch realisiert werden, dass eine zweidimensionale Grundstruktur zugrunde gelegt wird, die dann in die dritte Raumrichtung hochgezogen wird, also beispielsweise eine Honigwabenstruktur, die zu hohlen Säulen hochgezogen wird. Als zweidimensionale Grundstruktur bieten sich beispielsweise alle schiefwinkligen, rechtwinkligen, hexagonalen oder quadratischen Grundstrukturen an. Derartige Spulenkörper weisen im Inneren demnach zumindest bereichsweise eine Säulenstruktur auf.

Bevorzugt kann eine regelmäßige Struktur auch durch in dem Spulenkörper ausgebildete Rippen realisiert sein, der Spulenkörper weist also in seinem Inneren zumindest bereichsweise eine Rippenstruktur auf.

In einer weiteren bevorzugten Ausgestaltung weist der Spulenkörper in seinem Inneren zumindest bereichsweise eine Gitterstruktur auf. Eine Gitterstruktur ist dadurch realisiert, dass Stege aus dem keramischen Material gitterartig angeordnet und miteinander verbunden sind. Das zugrunde liegende Gitter kann beliebig ausgestaltet sein, beispielsweise als honigwabenförmiges Gitter oder als kubisches Gitter.

In einer weiteren bevorzugten Ausgestaltung ist der Spulenkörper von innen vollständig hohl ausgebildet.

Erfindungsgemäß ist es somit möglich, keramische Spulenkörper zu realisieren, die deutlich weniger Material bei gleicher Größe aufweisen, als dies Spulenkörper tun, die mit einem Spritzgussverfahren hergestellt sind. Hierdurch ergibt sich zum einen eine deutlich leichtere Konstruktion, zum anderen sind die Spulenkörper aufgrund der Materialersparnis deutlich kostengünstiger herstellbar.

Insbesondere bei der Verwendung der Spulenkörper für Coriolis-Durchflussmessgeräte ermöglicht eine deutlich leichtere Spulenanordnung eine weniger starke Beeinflussung des Schwingungsverhaltens der Messrohre.

Eine besonders bevorzugte Ausgestaltung, die zusätzlich oder alternativ realisiert sein kann, zeichnet sich dadurch aus, dass der Spulenkörper wenigstens eine Hinterschneidung aufweist. Dies ist aufgrund der Fertigung mittels eines additiven Fertigungsverfahrens ohne Weiteres realisierbar. Besonders bevorzugt ist die wenigstens eine Spulenwindung zumindest teilweise in der Hinterschneidung angeordnet. Weiter bevorzugt ist die wenigstens eine Spulenwindung vollständig in der Hinterschneidung angeordnet.

Um die Spulenanordnung und insbesondere die wenigstens eine Spulenwindung vor äußeren Einflüssen zu schützen, ist eine besonders bevorzugte Ausgestaltung der Spulenanordnung dadurch gekennzeichnet, dass die Spulenanordnung eine zum Außenraum hin zumindest teilweise abschließende Ummantelung aufweist. Ganz besonders bevorzugt umschließt die Ummantelung zumindest die wenigstens eine Spulenwindung vollständig, sodass keine Verbindung zum Außenraum besteht. Eine derartige Spulenwindung ist insbesondere vor Staub oder anderen Medien, die im Außenraum befindlich sind, geschützt. Zudem werden die Spulenwindungen durch die Ummantelung ebenfalls von Beschädigungen durch äußere Einflüsse geschützt. Eine derartige Ausgestaltung, bei der die Ummantelung die wenigstens eine Spulenwindung vollständig umschließt, ermöglicht beispielsweise die Verwendung der Spulenanordnung im explosionsschutzpflichtigen Bereich.

Weiter bevorzugt ist die Ummantelung ebenfalls aus einem keramischen Material gefertigt. Hierdurch weist auch die Ummantelung eine geringe Temperaturempfindlichkeit auf. In einer ganz besonders bevorzugten Ausgestaltung ist die Ummantelung mittels eines additiven Fertigungsverfahrens hergestellt. Weiter bevorzugt ist die Ummantelung einstückig mit dem Spulenkörper ausgebildet. Bei einer derartigen Ausgestaltung werden sowohl der Spulenkörper als auch die Ummantelung zeitgleich mittels dem gleichen additiven Fertigungsverfahrens realisiert. Insbesondere bietet es sich auch bei einer nicht einstückigen Ausgestaltung an, dass das gleiche additive Fertigungsverfahren zur Herstellung der Ummantelung und des Spulenkörpers verwendet wird.

Um die Spulenanordnung an einem Bauteil des Durchflussmessgerätes zu befestigen, ist in einer besonders bevorzugten Ausgestaltung vorgesehen, dass die Spulenanordnung ein Befestigungselement zur Befestigung der Spulenanordnung aufweist. Besonders bevorzugt ist auch dieses Befestigungselement aus einem keramischen Material gefertigt und mittels eines additiven Fertigungsverfahrens hergestellt. Eine derartige Ausgestaltung ist besonders vorteilhaft, da aufgrund des keramischen Materials eine thermische Isolierung zu dem Bauteil des Durchflussmessgerätes realisiert werden kann. Ist das Befestigungselement beispielsweise zur Befestigung der Spulenanordnung an einem Coriolis-Messrohr ausgestaltet, so kann durch das Messrohr ein hochtemperiertes Medium fließen, ohne dass dies einen schädlichen Einfluss auf die Spulenanordnung hat.

Besonders bevorzugt ist das Befestigungselement einstückig mit dem Spulenkörper ausgebildet. Weiter bevorzugt sind der Spulenkörper und das Befestigungselement also in einem einzigen Verfahrensschritt hergestellt. Sofern eine Ummantelung vorgesehen ist, die den Spulenkörper ummantelt, kann in einer weiteren bevorzugten Ausgestaltung das Befestigungselement ebenfalls an dieser Ummantelung befestigt sein oder einstückig mit der Ummantelung ausgebildet sein. Eine derartige Ausgestaltung, bei der das Befestigungselement einstückig mit dem Spulenkörper und/oder mit der Ummantelung ausgebildet ist, reduziert die Anzahl der notwendigen Bauteile und ermöglicht zudem eine einfachere Montage der Spulenanordnung in dem oder an dem Durchflussmessgerät.

Eine weitere Ausgestaltung der erfindungsgemäßen Spulenanordnung zeichnet sich dadurch aus, dass die wenigstens eine Spulenwindung durch ein additives Fertigungsverfahren hergestellt ist. Insbesondere ist die wenigstens eine Spulenwindung aus einer elektrischen leitfähigen Keramik hergestellt. Eine derartige Ausgestaltung ermöglicht eine vollständige Herstellung der Spulenanordnung mittels additiver Fertigungstechnik. Eine derartige Ausgestaltung weist den Vorteil auf, dass sowohl die wenigstens eine Spulenwindung als auch der Spulenkörper einen gleichen oder zumindest ähnlichen Wärmeausdehnungskoeffizienten aufweisen und es bei einer Temperaturänderung der Spulenanordnung zu deutlich geringeren Materialspannungen kommt, als dies bei der Verwendung gänzlich unterschiedlicher Materialien der Fall ist.

Neben der Spulenanordnung betrifft die Erfindung ebenfalls ein Durchflussmessgerät zur Bestimmung des Durchflusses eines Mediums. Das Durchflussmessgerät weist eine Spulenanordnung auf, wobei die Spulenanordnung einen Spulenkörper und wenigstens eine Spulenwindung aus einem elektrisch leitfähigen Material aufweist. Bei dem Durchflussmessgerät ist die Aufgabe dadurch gelöst, dass der Spulenkörper aus einem keramischen Material gefertigt ist und dass der Spulenkörpers mittels eines additiven Fertigungsverfahrens hergestellt ist.

In weiteren Ausgestaltungen des erfindungsgemäßen Durchflussmessgeräts ist die Spulenanordnung gemäß wenigstens einer der in Verbindung mit der erfindungsgemäßen Spulenanordnung erläuterten Ausgestaltungen realisiert. Entsprechend gelten sämtliche in Verbindung mit der erfindungsgemäßen Spulenanordnung gemachten Ausführungen und Ausgestaltungen mit ihren jeweiligen Vorteilen für das erfindungsgemäße Durchflussmessgerät entsprechend. Besonders bevorzugt ist das Durchflussmessgerät ein Coriolis-Durchflussmessgerät oder ein magnetisch-induktives Durchflussmessgerät.

Neben der Spulenanordnung und dem Durchflussmessgerät betrifft die Erfindung ebenfalls ein Verfahren zur Herstellung einer Spulenanordnung für ein Durchflussmessgerät, wobei die Spulenanordnung einen Spulenkörper aufweist und wenigstens eine Spulenwindung aus einem elektrisch leitfähigen Material aufweist. Das erfindungsgemäße Verfahren zeichnet sich zunächst dadurch aus, dass in einem Bereitstellungsschritt ein 3D-Modell wenigstens des Spulenkörpers bereitgestellt wird. Zur weiteren Fertigung umfasst das erfindungsgemäße Verfahren zwei alternative Varianten. In der ersten erfindungsgemäßen Variante wird in einem Spulenkörperdruckschritt der Spulenkörper mittels eines additiven Fertigungsverfahrens anhand des 3D-Modells aus einem keramischen Material gefertigt und in einem Windungsschritt die wenigstens eine Spulenwindung um den Spulenkörper angeordnet. Es wird also zunächst der Spulenkörper gedruckt und anschließend die Spulenwindung um den Spulenkörper angeordnet. Dies kann beispielsweise durch ein Umwickeln oder durch ein "Aufstecken" der Spulenwindung sein.

In der alternativen Variante wird zunächst in einem Spulenwindungsbereitstellungsschritt die wenigstens eine Spulenwindung bereitgestellt. Die Spulenwindung kann beispielsweise um einen provisorischen Spulenkörper gewickelt werden und dieser provisorische Spulenkörper wieder entfernt werden, sodass allein die Spulenwindung zurück bleibt. Anschließend wird in einem Spulenkörperdruckschritt der Spulenkörper mittels eines additiven Fertigungsverfahrens anhand des 3D-Modells aus einem keramischen Material zumindest teilweise in den Innenbereich der bereitgestellten Spulenwindung gedruckt, derart, dass die bereitgestellte Spulenwindung um den gedruckten Spulenkörper angeordnet ist.

Durch das erfindungsgemäße Verfahren lassen sich besonders vorteilhafte Spulenanordnungen auf vereinfachte Weise herstellen. Die Verwendung eines additiven Fertigungsverfahrens unter Verwendung eines keramischen Materials ermöglicht die Realisierung von hochtemperaturgeeigneten Spulenanordnungen, die bevorzugt eine feine Struktur aufweisen. Insbesondere ermöglicht das erfindungsgemäße Verfahren eine Reduzierung des benötigten Materials im Vergleich zu aus dem Stand der Technik bekannten Verfahren zum Fertigen von Spulenanordnungen, beispielsweise im Vergleich zu Spritzgussverfahren.

Eine besonders bevorzugte Ausführungsform des erfindungsgemäßen Verfahrens ist dadurch ausgezeichnet, dass der Spulenkörperdruckschritt in wenigstens einen ersten Teilspulenkörperdruckschritt und einen zweiten Teilspulenkörperdruckschritt unterteilt wird. In dem ersten Teilspulenkörperdruckschritt wird ein erster Spulenkörperteil gefertigt. Erfindungsgemäß ist ferner vorgesehen, dass dann in dem Windungsschritt die wenigstens eine Spulenwindung um den ersten Spulenkörperteil angeordnet wird. In dem zweiten Teilspulenkörperdruckschritt wird der zweite Spulenkörperteil gefertigt. Dies erfolgt besonders vorteilhaft derart, dass der zweite Spulenkörperteil einstückig mit dem ersten Spulenkörperteil ausgebildet wird.

In einer besonders bevorzugten Ausführungsform wird in dem Bereitstellungsschritt ein 3D-Modell des Spulenkörpers bereitgestellt, bei dem der Spulenkörper in seinem Inneren zumindest teilweise hohl ausgebildet ist. Dies wird dadurch realisiert, dass das Material im Inneren des Spulenkörpers zumindest teilweise in einer unregelmäßigen Struktur angeordnet ist und/oder zumindest teilweise in einer regelmäßigen Struktur angeordnet ist. Somit ist es möglich, die Materialersparnis zu erhöhen und deutlich leichtere Spulenanordnungen zu fertigen im Vergleich zu Spulenanordnungen, die einen massiven Spulenkörper aufweisen. Durch die Verwendung eines additiven Fertigungsverfahrens können die erfindungsgemäßen Strukturen leicht gefertigt werden.

Wie in Zusammenhang mit der erfindungsgemäßen Spulenanordnung ausgeführt, ist in einer besonders bevorzugten Variante der Spulenanordnung vorgesehen, dass die wenigstens eine Spulenwindung ebenfalls mittels eines additiven Fertigungsverfahrens realisiert ist. Entsprechend zeichnet sich eine besonders bevorzugten Ausführungsform des erfindungsgemäßen Verfahrens dadurch aus, dass in einem Spulenwindungsmodellbereitstellungsschritt ein 3D-Modell der wenigstens einen Spulenwindung bereitgestellt wird und dass in einem Spulenwindungsdruckschritt die wenigstens eine Spulenwindung mittels eines additiven Fertigungsverfahrens anhand des 3D-Modells aus einem elektrisch leitfähigen Material gefertigt wird. Besonders bevorzugt wird eine elektrisch leitfähige Keramik verwendet. Dies hat den besonderen Vorteil, dass die Wärmeausdehnungskoeffizienten der wenigstens einen Spulenwindung und des Spulenkörpers im Wesentlichen gleich sind, sodass bei einer Temperaturänderung keine oder nur geringe mechanische Spannungen zu erwarten sind.

Eine weitere bevorzugte Ausführungsform der erfindungsgemäßen Spulenanordnung weist eine zum Außenraum hin zumindest teilweise abschließende Ummantelung auf. Eine Weiterentwicklung des erfindungsgemäßen Verfahrens zum Herstellen einer derartigen Spulenanordnung zeichnet sich entsprechend dadurch aus, dass in einem dritten Bereitstellungsschritt ein 3D-Modell der Ummantelung bereitgestellt wird und dass in einem Ummantelungsdruckschritt die Ummantelung mittels eines additiven Fertigungsverfahrens anhand des 3D-Modells aus einem keramischen Material gefertigt wird.

Besonders bevorzugt werden der Spulenkörperdruckschritt und der Ummantelungsdruckschritt zeitgleich durchgeführt. Insbesondere werden der Spulenkörper und die Ummantelung einstückig realisiert.

Wie weiter oben beschrieben, weist eine weitere bevorzugte Ausgestaltung der Spulenanordnung wenigstens ein Befestigungselement zur Befestigung der Spulenanordnung an einem Bauteil eines Durchflussmessgerätes auf. Eine besonders bevorzugte Ausführungsform des erfindungsgemäßen Verfahrens ist dadurch gekennzeichnet, dass in einem vierten Bereitstellungsschritt ein 3D-Modell des Befestigungselements bereitgestellt wird und dass in einem Befestigungselementdruckschritt das Befestigungselement mittels eines additiven Fertigungsverfahrens anhand des 3D-Modells aus einem keramischen Material gefertigt wird. Besonders bevorzugt erfolgen der Befestigungselementdruckschritt und der Spulenkörperdruckschritt und/oder der Ummantelungsdruckschritt zeitgleich, insbesondere derart, dass das Befestigungselement und der Spulenkörper und/oder die Ummantelung einstückig realisiert werden.

Sämtliche in Zusammenhang mit der erfindungsgemäßen Spulenanordnung gemachten Ausführungen lassen sich analog auf das erfindungsgemäße Verfahren übertragen und gelten entsprechend.

Im Einzelnen gibt es nun verschiedene Möglichkeiten, die erfindungsgemäße Spulenanordnung, das erfindungsgemäße Durchflussmessgerät und das erfindungsgemäße Verfahren auszugestalten und weiterzubilden. Hierzu wird verwiesen auf die den nebengeordneten Patentansprüchen nachgeordneten Patentansprüche sowie auf die Beschreibung bevorzugter Ausführungsbeispiele in Verbindung mit der Zeichnung. In der Zeichnung zeigen
- Fig. 1: eine erste Ausführungsform einer Spulenanordnung,
- Fig. 2: eine zweite Ausführungsform einer Spulenanordnung,
- Fig. 3: eine dritte Ausführungsform einer Spulenanordnung,
- Fig. 4: eine vierte Ausführungsform einer Spulenanordnung,
- Fig. 5a: eine erste Darstellung einer fünften Ausführungsform einer Spulenanordnung,
- Fig. 5b: eine zweite Darstellung einer fünften Ausführungsform einer Spulenanordnung,
- Fig. 6: eine sechste Ausführungsform einer Spulenanordnung,
- Fig. 7: eine siebte Ausführungsform einer Spulenanordnung,
- Fig. 8: einen Ausschnitt eines Durchflussmessgerätes mit einer Spulenanordnung,
- Fig. 9: einen Ausschnitt eines Durchflussmessgerätes mit einer weiteren Spulenanordnung,
- Fig. 10a: ein Blockdiagramm einer ersten Variante eines ersten Verfahrens zum Herstellen einer Spulenanordnung,
- Fig. 10b: ein Blockdiagramm einer zweiten Variante eines ersten Verfahrens zum Herstellen einer Spulenanordnung,
- Fig. 11: ein Blockdiagramm eines zweiten Verfahrens zum Herstellen einer Spulenanordnung und
- Fig. 12: ein Blockdiagramm eines dritten Verfahrens zum Herstellen einer Spulenanordnung.

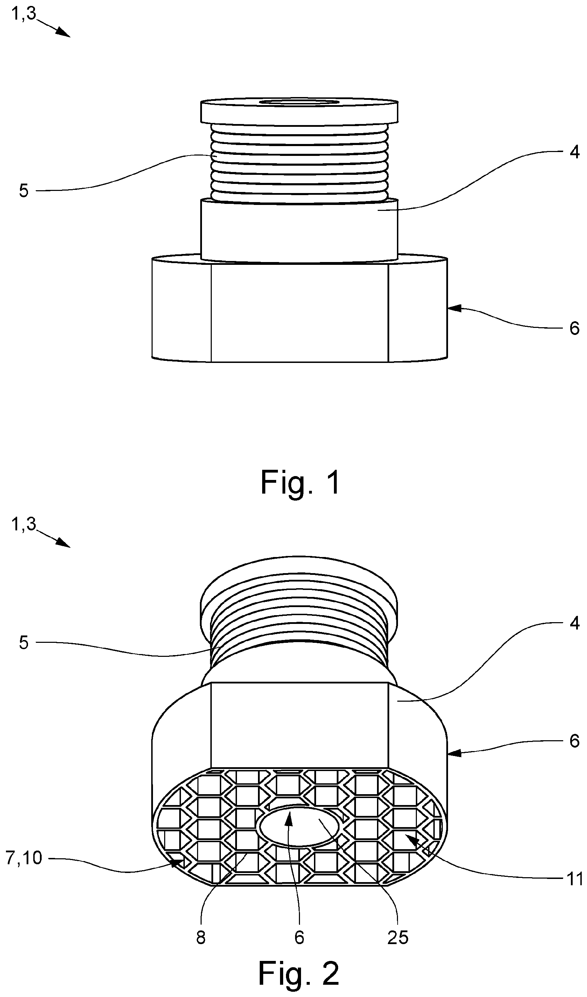

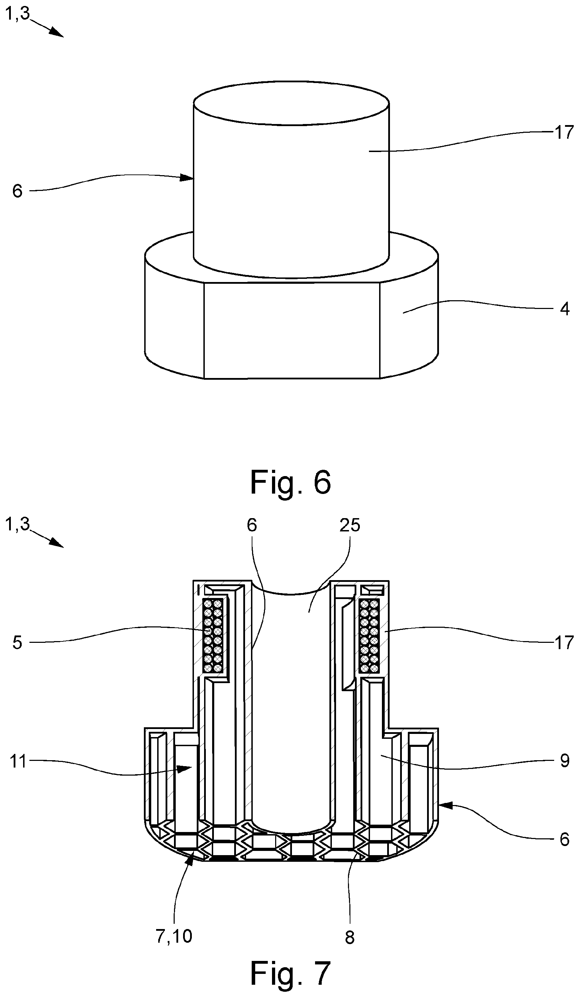

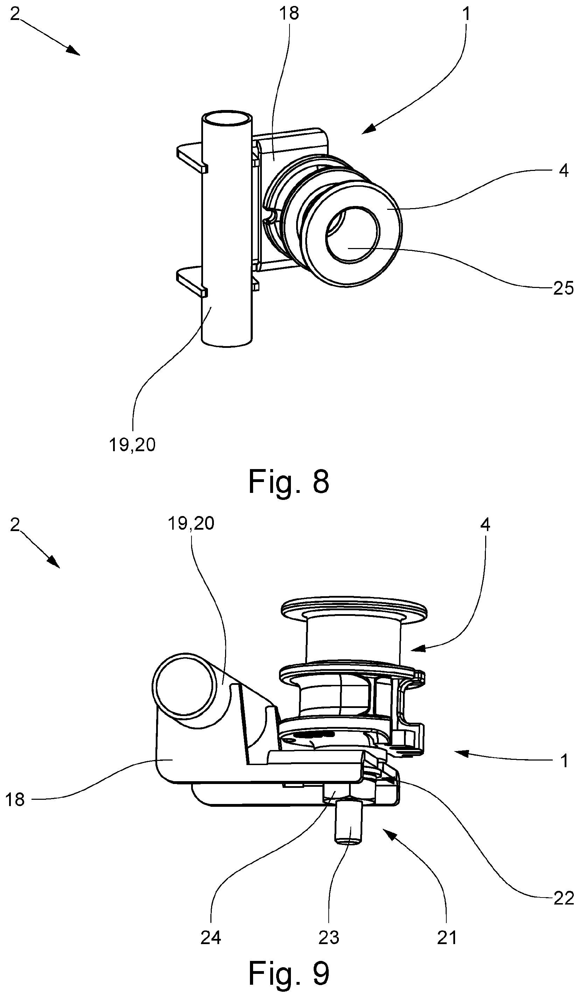

Fig. 1 zeigt eine erste Ausführungsform einer Spulenanordnung 1 für ein Durchflussmessgerät 2, wobei ein Durchflussmessgerät 2 in Teilen in den Fig. 7 und 8 dargestellt ist. Die Spulenanordnung 1 weist eine Spule 3 auf, die einen Spulenkörper 4 aufweist und wenigstens eine Spulenwindung 5 aus einem elektrisch leitfähigen Material. In der dargestellten Ausführungsform weist die Spule 3 mehrere Spulenwindungen 5 aus Kupfer auf. Der Spulenkörper 4 ist aus einem keramischen Material gefertigt. Zudem ist der Spulenkörper 4 mittels eines additiven Fertigungsverfahrens hergestellt, vorliegend mittels Stereolithografie. Der Spulenkörper 4 ist in der dargestellten Ausführungsform 4 in seinem von den Spulenkörperwänden 6 begrenzten Inneren 11 derart ausgebildet, dass das Material im Inneren 11 des Spulenkörpers 4 in einer unregelmäßigen Struktur angeordnet ist. Dies ist vorliegend dadurch realisiert, dass der Spulenkörper 4 sowohl Bereiche mit einer offenen Porosität aufweist als auch Bereiche mit einer geschlossenen Porosität aufweist. Durch die Herstellung mittels des additiven Fertigungsverfahrens ist die Realisierung solcher Strukturen im Inneren 11 des Spulenkörpers 4 ohne Weiteres möglich. Hierdurch kann insbesondere Material eingespart werden, sodass die Spulenkörper 4 und damit die Spulenanordnungen 1 kostengünstiger herstellbar sind. Zudem weisen derartige Spulenanordnungen 1 gegenüber Spulenanordnungen 1 mit massiven Spulenkörpern 4 ein reduziertes Gewicht auf.

Fig. 2 zeigt eine zweite Ausführungsform einer Spulenanordnung 1, die ebenfalls eine Spule 3 aufweist. Auch der in Fig. 2 dargestellte Spulenkörper 2 ist aus einem keramischen Material gefertigt und ist mittels eines additiven Fertigungsverfahrens, vorliegend mittels Sinterlithografie, hergestellt worden. Im Gegensatz zu der in Fig. 1 dargestellten Ausführungsform weist der Spulenkörper 4 in seinem von den Spulenkörperwänden 6 begrenzten Inneren 11 keine unregelmäßige Struktur auf, sondern weist eine regelmäßige Struktur 7 auf. Der regelmäßigen Struktur 7 liegt ein zweidimensionales Honigwabengitter 8 zugrunde, das dann in die dritte Raumrichtung zu Säulen 9 hochgezogen wurde. Insgesamt ist die regelmäßige Struktur 7 vorliegend also durch eine Säulenstruktur 10 realisiert.

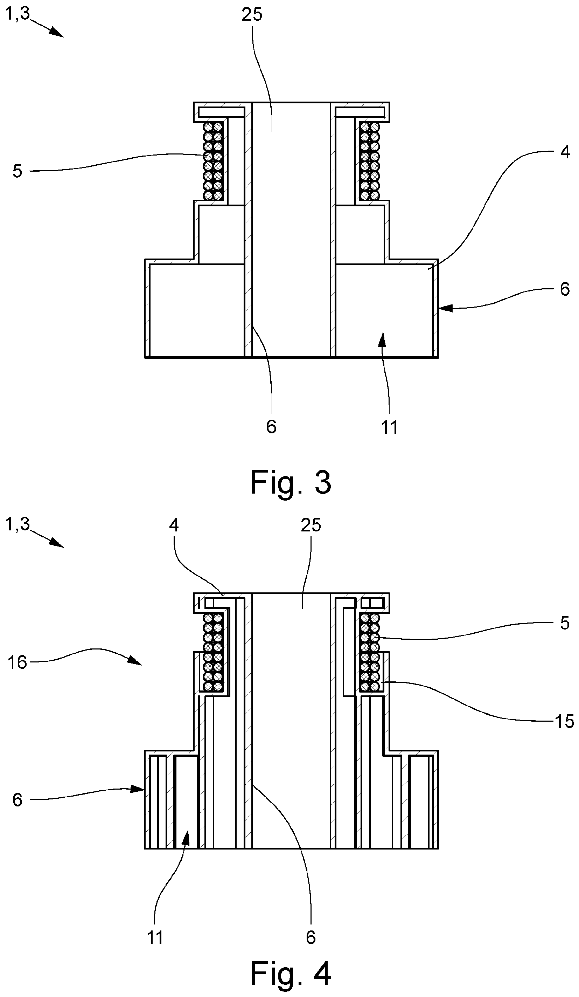

Sämtliche in den Figuren dargestellten Spulenkörper 4 sind mittels eines additiven Fertigungsverfahrens hergestellt und bestehen aus einem keramischen Material. Eine weitere Ausführungsform einer Spulenanordnung 1 ist in Fig. 3 dargestellt. Bei dieser Ausführungsform ist der Spulenkörper 4 von innen hohl ausgebildet. In dem von den Spulenkörperwänden 6 begrenzten Innenraum 11 ist demnach kein keramisches Material angeordnet. Die Spulenwindungen 5 sind aus Kupfer realisiert und um den keramischen Spulenkörper 4 gewickelt.

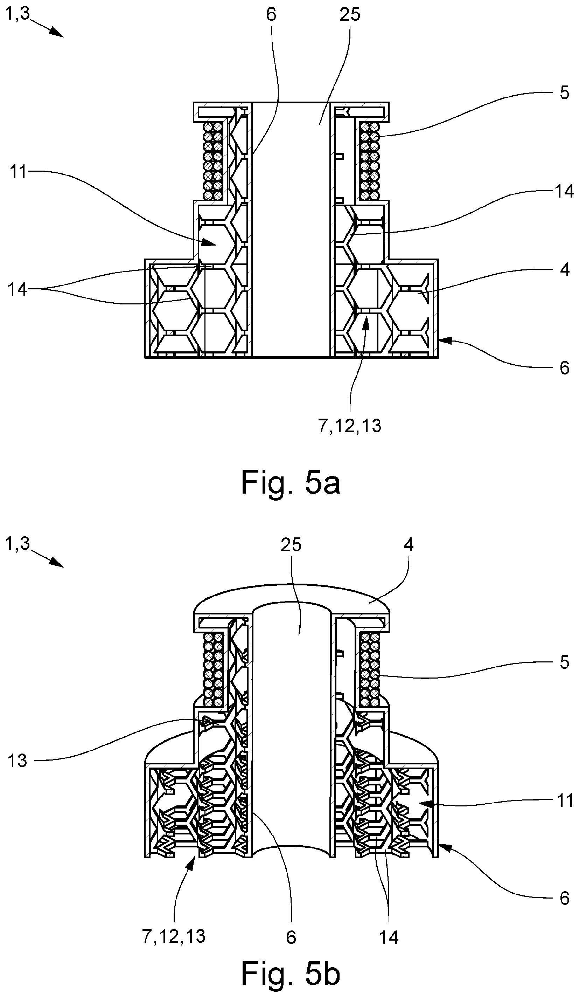

Die Fig. 5a und 5b zeigen eine Ausführungsform, bei der die regelmäßige Struktur 7 im Inneren 11 des keramischen Spulenkörpers 4 durch eine Gitterstruktur 12 realisiert ist. Vorliegend ist ein dreidimensionales Honigwabengitter 13 durch die Gitterpunkte des Honigwabengitters 13 verbindende Stege 14 realisiert. Bei einer derartigen Ausführungsform wird das benötigte Material weiter reduziert. Aufgrund der Gitterstruktur 12 weist der Spulenkörper 4 gleichwohl eine ausreichende mechanische Stabilität auf.

Eine weitere Ausführungsform einer Spulenanordnung 1 ist in Fig. 4 dargestellt. Die hier dargestellte Spulenanordnung 1 ist in ihrem Inneren 11 identisch zu der in Fig. 2 dargestellten Ausführungsform ausgefertigt, weist also eine geordnete Struktur 7 in Form einer Säulenstruktur 10 auf. Im Unterschied zu der in Fig. 2 dargestellten Ausführungsform weist die in Fig. 4 dargestellte Ausführungsform eine Hinterschneidung 15 auf, in der die Spulenwindungen 5 zumindest teilweise angeordnet sind. Das Realisieren einer Hinterschneidung 15 in dem keramischen Spulenkörper 4 ist aufgrund der Fertigung des Spulenkörpers 4 mittels eines additiven Fertigungsverfahrens ohne Weiteres möglich. Dadurch, dass die Spulenwindungen 5 zumindest teilweise in der Hinterschneidung 15 angeordnet sind, bildet die Hinterschneidung 15 einen Schutz gegenüber dem Außenraum 16 der Spulenanordnung 1.

Die in Fig. 6 dargestellte Spulenanordnung 1 weist neben dem Spulenkörper 4 und den nicht sichtbaren Spulenwindungen 5 eine Ummantelung 17 auf. Sowohl der Spulenkörper 4 als auch die Ummantelung 17 sind aus einem keramischen Material und mittels additiver Fertigung hergestellt. Die Ummantelung 17 ist im Bereich der Spulenwindungen 5 angeordnet und bildet somit einen Abschluss zum Außenraum 16. Die Spulenwindungen 5 sind vollständig durch die Ummantelung 17 vom Außenraum 16 isoliert. Zudem ist der Spulenkörper 4 in seinem Inneren 11 massiv ausgebildet.

Fig. 7 zeigt ebenfalls eine Darstellung einer Spulenanordnung, die ebenfalls wie die in Fig. 6 dargestellte Spulenanordnung eine Ummantelung 17 aufweist. Fig. 7 zeigt einen Querschnitt durch die Spulenanordnung 1, sodass in Fig. 7 besonders gut ersichtlich ist, dass die Ummantelung 17 einstückig mit dem Spulenkörper 4 ausgebildet ist und zudem die Spulenwindungen 5 vollständig zum Außenraum 16 hin abgrenzt. Eine derartige Spulenanordnung 1 ist besonders vorteilhaft aufgrund der additiven Fertigung realisierbar.

In den Fig. 8 und 9 sind jeweils ein Ausschnitt eines Durchflussmessgerätes 2 mit einer Spulenanordnung 1 dargestellt. In beiden dargestellten Ausgestaltungen weisen die Spulenanordnungen 1 ein ein Befestigungselement 18 zur Befestigung der Spulenanordnungen 1 an einem Bauteil 19 des Durchflussmessgerätes 2 auf. Vorliegend sind in beiden Darstellungen die Spulenanordnungen 1 an dem Messrohr 20 des Durchflussmessgerätes 2, vorliegend eines Coriolis-Durchflussmessgerätes, befestigt. Bei beiden dargestellten Ausführungsformen ist das Befestigungselement 18 aus einem keramischen Material gefertigt und zudem mittels eines additiven Fertigungsverfahrens hergestellt. Bei dem in Fig. 8 dargestellten Ausführungsbeispiel ist das Befestigungselement 18 einstückig mit dem Spulenkörper 4 ausgebildet. Insbesondere sind das Befestigungselement 18 und der Spulenkörper 4 in einem gemeinsamen Druckschritt additiv gefertigt worden.

Im Unterschied dazu ist das Befestigungselement 18 der in Fig. 9 dargestellten Ausführungsform als separates Bauteil realisiert. Der Spulenkörper 4 und das Befestigungselement 18 sind durch zusätzliche Verbindungsmittel 21 miteinander verbunden. Vorliegend ist das derart realisiert, dass das Befestigungselement 18 eine Ausnehmung 22 aufweist, durch die ein mit dem Spulenkörper verbundener Verbindungsstab 23 durchgeführt ist. Eine Mutter 24, die auf den Verbindungsstab 23 aufgeschraubt ist, fixiert den Spulenkörper 4 und das Verbindungselement 18 relativ zueinander.

In den meisten Figuren weist der Spulenkörper 4 einen Kanal 25 zur Führung von elektrischen Verbindungen auf.

Eine weitere Besonderheit weist die in Fig. 6 dargestellte Spulenanordnung 1 auf. Die wenigstens eine Spulenwindung 5, die hinter der Ummantelung 17 angeordnet und demnach nicht sichtbar ist, ist aus einer elektrisch leitfähigen Keramik hergestellt und ist zudem mittels eines additiven Fertigungsverfahrens hergestellt worden.

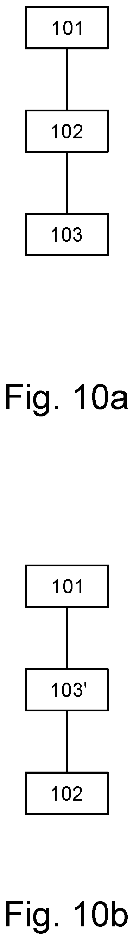

Fig. 10a zeigt ein Blockdiagramm einer ersten Variante eines ersten Verfahrens 100 zur Herstellung einer Spulenanordnung, wie sie beispielsweise in Fig. 1 dargestellt ist. In einem Bereitstellungsschritt 101 ein 3D-Modell wenigstens des Spulenkörpers bereitgestellt. In einem Spulenkörperdruckschritt 102 wird der Spulenkörper mittels eines additiven Fertigungsverfahrens anhand des 3D-Modells aus einem keramischen Material gefertigt und in einem Windungsschritt 103 die wenigstens eine Spulenwindung um den Spulenkörper angeordnet. In der dargestellten Ausführungsform des Verfahrens 100 wird in dem Bereitstellungsschritt 101 ein 3D-Modell des Spulenkörpers bereitgestellt, bei dem der Spulenkörper in seinem Inneren zumindest teilweise hohl ausgebildet ist, dadurch, dass das Material im Inneren des Spulenkörpers zumindest teilweise in einer unregelmäßigen Struktur angeordnet ist.

Fig. 10b zeigt ein Blockdiagramm einer zweiten Variante eines ersten Verfahrens 100 zur Herstellung einer Spulenanordnung, wie sie in Fig. 1 dargestellt ist. Bei der zweiten Variante wird auch zunächst in einem Bereitstellungsschritt 101 ein 3D-Modell wenigstens des Spulenkörpers bereitgestellt. Im Unterschied zu der ersten Variante wird nun in einem Spulenwindungsbereitstellungsschritt 103' die wenigstens eine Spulenwindung bereitgestellt. Anschließend wird in einem Spulenkörperdruckschritt (102) der Spulenkörper mittels eines additiven Fertigungsverfahrens anhand des 3D-Modells aus einem keramischen Material zumindest teilweise in den Innenbereich der bereitgestellten Spulenwindung gedruckt. Dies erfolgt derart, dass die bereitgestellte Spulenwindung um den gedruckten Spulenkörper angeordnet ist.

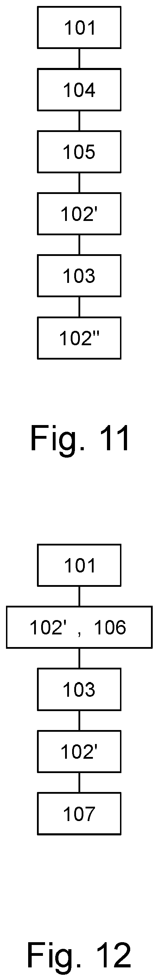

Fig. 11 zeigt eine zweite Ausführungsform eines Verfahrens 100' zur Fertigung einer Spulenanordnung. In der dargestellten Ausführungsform wird ebenfalls in einem Bereitstellungsschritt 100 ein ein 3D-Modell des Spulenkörpers bereitgestellt. Im Unterschied zu der Ausführungsform der Fig. 10 wird in dem Bereitstellungsschritt 101 ein 3D-Modell des Spulenkörpers bereitgestellt, bei dem der Spulenkörper in seinem Inneren zumindest teilweise hohl ausgebildet ist, dadurch, dass das Material im Inneren des Spulenkörpers zumindest teilweise in einer regelmäßigen Struktur angeordnet ist. In einem Spulenwindungsbereitstellungsschritt 104 wird ein 3D-Modell der wenigstens einen Spulenwindung bereitgestellt. In einem Spulenwindungsdruckschritt 105 wird die wenigstens eine Spulenwindung mittels eines additiven Fertigungsverfahrens anhand des bereitgestellten 3D-Modells aus einem elektrisch leitfähigen Material, vorliegend aus einer elektrisch leitfähigen Keramik, gefertigt. Ebenfalls im Unterschied zu der in Fig. 10 dargestellten Ausführungsform wird bei dem vorliegend dargestellten Verfahren 100' der der Spulenkörperdruckschritt 102 in wenigstens einen ersten Teildruckschritt 102' und einen zweiten Teildruckschritt 102" unterteilt. Zunächst wird in dem ersten Teildruckschritt 102' ein erster Spulenkörperteil gefertigt. Anschließend wird in dem Windungsschritt 103 die wenigstens eine Spulenwindung um den ersten Spulenkörperteil angeordnet und anschließend in dem zweiten Teildruckschritt 102" der zweite Spulenkörperteil gefertigt. Der ersten Spulenkörperteil und der zweite Spulenkörperteil werden derart gefertigt, dass sie einstückig ausgebildet sind, also unlösbar miteinander verbunden sind.

Fig. 12 zeigt ein Blockdiagramm eines Verfahrens 100" zum Herstellen einer Spulenanordnung, bei der die Spulenanordnung sowohl eine die Spulenanordnung eine zum Außenraum hin zumindest teilweise abschließende Ummantelung und ein Befestigungselement zur Befestigung der Spulenanordnung an einem Bauteil eines Durchflussmessgerätes aufweist. In dem Bereitstellungsschritt 101 wird neben dem 3D-Modell des Spulenkörpers ebenfalls ein 3D-Modell der Ummantelung sowie ein 3D-Modell des Befestigungselements bereitgestellt. Anschließend wird der erste Teilschritt 102' des Spulenkörperdruckschritts 102 zeitgleich mit einem Ummantelungsdruckschritt 106 durchgeführt. In dem Ummantelungsdruckschritt 106 wird die Ummantelung mittels eines additiven Fertigungsverfahrens, vorliegend also mit dem zur Fertigung des Spulenkörpers verwendeten additiven Fertigungsverfahrens, hergestellt. Dies erfolgt derart, dass zumindest der erste Spulenkörperteil und die Ummantelung einstückig ausgeführt sind. In einem Windungsschritt 103 werden die Spulenwindungen um den ersten Spulenkörperteil angeordnet. Anschließend wird der zweite Teilschritt 102" des Spulenkörperdruckschritts 102 ausgeführt. In einem Befestigungselementdruckschritt 107 wird das Befestigungselement mittels eines additiven Fertigungsverfahrens anhand des 3D-Modells aus einem keramischen Material gefertigt. Vorliegend werden das gleiche Verfahren und das gleiche Material wie zur Fertigung des Spulenkörpers und der Ummantelung verwendet. In dem dargestellten Verfahren erfolgt der Befestigungselmementdruckschritt 107 unabhängig. In einer weiteren nicht dargestellten Ausführungsform werden der Befestigungselementdruckschritt 107, der Spulenkörperdruckschritt 102 und der Ummantelungsdruckschritt 106 zeitgleich durchgeführt, derart, dass das Befestigungselement, der Spulenkörper und die Ummantelung einstückig realisiert werden.

### Bezugszeichen

- 1: Spulenanordnung
- 2: Durchflussmessgerät
- 3: Spule
- 4: Spulenkörper
- 5: Spulenwindung
- 6: Spulenkörperwände
- 7: regelmäßige Struktur
- 8: zweidimensionales Honigwabengitter
- 9: Säulen
- 10: Säulenstruktur
- 11: Inneres des Spulenkörpers
- 12: Gitterstruktur
- 13: dreidimensionales Honigwabengitter
- 14: Stege
- 15: Hinterschneidung
- 16: Außenraum
- 17: Ummantelung
- 18: Befestigungselement
- 19: Bauteil des Durchflussmessgeräts
- 20: Messrohr
- 21: Verbindungsmittel
- 22: Ausnehmung
- 23: Verbindungsstab
- 24: Mutter
- 25: Kanal

- 100: Verfahren
- 101: Bereitstellungsschritt
- 102: Spulenkörperdruckschritt
- 102': erster Teildruckschritt
- 102": zweiter Teildruckschritt
- 103: Windungsschritt
- 103': Spulenwindungsbereitstellungsschritt
- 104: Spulenwindungsmodellbereitstellungsschritt
- 105: Spulenwindungsdruckschritt
- 106: Ummantelungsdruckschritt
- 107: Befestigungselementdruckschritt

## Patentansprüche

1. Spulenanordnung (1) für ein Durchflussmessgerät (2), insbesondere ein Coriolis-Durchflussmessgerät oder ein magnetisch-induktives Durchflussmessgerät, mit einer Spule (3), wobei die Spule (3) einen Spulenkörper (4) aufweist und wenigstens eine Spulenwindung (5) aus einem elektrisch leitfähigen Material aufweist, wobei der Spulenkörper (4) aus einem keramischen Material gefertigt ist und wobei der Spulenkörper (4) mittels eines additiven Fertigungsverfahrens hergestellt ist,
wobei der Spulenkörper (4) in seinem von den Spulenkörperwänden (6) begrenzten Inneren (11) zumindest teilweise hohl ausgebildet ist,
**dadurch gekennzeichnet,**
**dass** das Material im Inneren (11) des Spulenkörpers (4) zumindest teilweise in einer unregelmäßigen Struktur angeordnet ist und/oder zumindest teilweise in einer regelmäßigen Struktur (7) angeordnet ist.

2. Spulenanordnung (1) nach Anspruch 1, **dadurch gekennzeichnet, dass** der Spulenkörper (4) zumindest teilweise in seinem Inneren (11) eine offene Porosität und/oder eine geschlossene Porosität und/oder eine Säulenstruktur (10) und/oder eine Rippenstruktur und/oder eine Gitterstruktur (12) aufweist.

3. Spulenanordnung (1) nach Anspruch 1 oder 2, **dadurch gekennzeichnet, dass** der Spulenkörper (4) wenigstens eine Hinterschneidung (15) aufweist, insbesondere dass die wenigstens eine Spulenwindung (5) zumindest teilweise in der Hinterschneidung (15) angeordnet ist.

4. Spulenanordnung (1) nach einem der Ansprüche 1 bis 3, **dadurch gekennzeichnet, dass** die Spulenanordnung (1) eine zum Außenraum (16) hin zumindest teilweise abschließende Ummantelung (17) aufweist, insbesondere dass die Ummantelung (17) aus einem keramischen Material gefertigt und mittels eines additiven Fertigungsverfahrens hergestellt ist, weiter insbesondere dass die Ummantelung (17) einstückig mit dem Spulenkörper (4) ausgebildet ist.

5. Spulenanordnung (1) nach einem der Ansprüche 1 bis 4, **dadurch gekennzeichnet, dass** die Spulenanordnung (1) ein Befestigungselement (18) zur Befestigung der Spulenanordnung (1) an einem Bauteil (10) eines Durchflussmessgerätes (2) aufweist, insbesondere dass das Befestigungselement (18) aus einem keramischen Material gefertigt und mittels eines additiven Fertigungsverfahrens hergestellt ist, weiter insbesondere dass das Befestigungselement (18) einstückig mit dem Spulenkörper (4) und/ oder - sofern eine Ummantelung (17) vorgesehen ist - mit der Ummantelung (17) ausgebildet ist.

6. Spulenanordnung (1) nach einem der Ansprüche 1 bis 5, **dadurch gekennzeichnet, dass** die wenigstens eine Spulenwindung (5) durch ein additives Fertigungsverfahren hergestellt ist, insbesondere wobei die wenigstens eine Spulenwindung (5) aus einer leitfähigen Keramik hergestellt ist.

7. Verfahren (100) zur Herstellung einer Spulenanordnung für ein Durchflussmessgerät, wobei die Spulenanordnung einen Spulenkörper aufweist und wenigstens eine Spulenwindung aus einem elektrisch leitfähigen Material aufweist,
**dadurch gekennzeichnet,**
**dass** in einem Bereitstellungsschritt (101) ein 3D-Modell wenigstens des Spulenkörpers bereitgestellt wird,
**dass** in dem Bereitstellungsschritt (101) ein 3D-Modell des Spulenkörpers bereitgestellt wird, bei dem der Spulenkörper in seinem Inneren zumindest teilweise hohl ausgebildet ist, dadurch, dass das Material im Inneren des Spulenkörpers zumindest teilweise in einer unregelmäßigen Struktur angeordnet ist und/oder zumindest teilweise in einer regelmäßigen Struktur angeordnet ist,
und **dass** ferner folgende Verfahrensschritte ausgeführt werden:
• **dass** in einem Spulenkörperdruckschritt (102) der Spulenkörper mittels eines additiven Fertigungsverfahrens anhand des 3D-Modells aus einem keramischen Material gefertigt wird und dass in einem Windungsschritt (103) die wenigstens eine Spulenwindung um den Spulenkörper angeordnet wird,
oder
• **dass** in einem Spulenwindungsbereitstellungsschritt (103') die wenigstens eine Spulenwindung bereitgestellt wird und dass in einem Spulenkörperdruckschritt (102) der Spulenkörper mittels eines additiven Fertigungsverfahrens anhand des 3D-Modells aus einem keramischen Material zumindest teilweise in den Innenbereich der bereitgestellten Spulenwindung gedruckt wird, derart, dass die bereitgestellte Spulenwindung um den gedruckten Spulenkörper angeordnet ist.

8. Verfahren (100) nach Anspruch 7, **dadurch gekennzeichnet, dass** der Spulenkörperdruckschritt (102) in wenigstens einen ersten Teildruckschritt (102') und einen zweiten Teildruckschritt (102") unterteilt wird, dass in dem ersten Teildruckschritt (102') ein erster Spulenkörperteil gefertigt wird, dass in dem Windungsschritt (103) die wenigstens eine Spulenwindung um den ersten Spulenkörperteil angeordnet wird, und dass in einem zweiten Teildruckschritt (102") der zweite Spulenkörperteil gefertigt wird, insbesondere derart, dass er einstückig mit dem ersten Spulenkörperteil ausgebildet ist.

9. Verfahren (100) nach Anspruch 7 oder 8, **dadurch gekennzeichnet, dass** in einem Spulenwindungsmodellbereitstellungsschritt (104) ein 3D-Modell der wenigstens einen Spulenwindung bereitgestellt wird, und dass in einem Spulenwindungsdruckschritt (105) die wenigstens eine Spulenwindung mittels eines additiven Fertigungsverfahrens anhand des 3D-Modells aus einem elektrisch leitfähigen Material, insbesondere aus einer elektrisch leitfähigen Keramik, gefertigt wird.

10. Verfahren (100) nach einem der Ansprüche 7 bis 9, wobei die Spulenanordnung eine zum Außenraum hin zumindest teilweise abschließende Ummantelung aufweist, **dadurch gekennzeichnet, dass** in dem Bereitstellungsschritt (101) ein 3D-Modell der Ummantelung bereitgestellt wird und dass in einem Ummantelungsdruckschritt (106) die Ummantelung mittels eines additiven Fertigungsverfahrens anhand des 3D-Modells aus einem keramischen Material gefertigt wird, insbesondere dass der Spulenkörperdruckschritt (102) oder wenigstens der erste Teildruckschritt (102') des Spulenkörperdruckschritts (102) und der Ummantelungsdruckschritt (106) zeitgleich durchgeführt werden, insbesondere derart, dass der Spulenkörper und die Ummantelung einstückig realisiert werden.

11. Verfahren (100) nach einem der Ansprüche 7 bis 10, wobei die Spulenanordnung wenigstens ein Befestigungselement zur Befestigung der Spulenanordnung an einem Bauteil eines Durchflussmessgerätes aufweist, **dadurch gekennzeichnet, dass** in dem Bereitstellungsschritt (101) ein 3D-Modell des Befestigungselements bereitgestellt wird und dass in einem Befestigungselementdruckschritt (107) das Befestigungselement mittels eines additiven Fertigungsverfahrens anhand des 3D-Modells aus einem keramischen Material gefertigt wird, insbesondere dass der Befestigungselementdruckschritt (197) und der Spulenkörperdruckschritt (102) und/oder der Ummantelungsdruckschritt (106) zeitgleich erfolgen, insbesondere derart, dass das Befestigungselement und der Spulenkörper und/oder die Ummantelung einstückig realisiert werden.

## Claims

1. Coil arrangement (1) for a flow meter (2), in particular a Coriolis flow meter or a magnetic-inductive flow meter, with a coil (3), wherein the coil (3) has a coil body (4) and at least one coil winding (5) made of an electrically conductive material, wherein the coil body (4) is made of a ceramic material and wherein the coil body (4) is produced by means of an additive manufacturing process,
wherein the coil body (4) is at least partially hollow in its interior (11) bounded by the coil body walls (6),
**characterized in**
**that** the material in the interior (11) of the coil body (4) is at least partially arranged in an irregular structure and/or at least partially arranged in a regular structure (7).

2. Coil arrangement (1) according to claim 1, **characterized in that** the coil body (4) has at least partially in its interior (11) an open porosity and/or a closed porosity and/or a columnar structure (10) and/or a ribbed structure and/or a lattice structure (12).

3. Coil arrangement (1) according to claim 1 or 2, **characterized in that** the coil body (4) has at least one back taper (15), in particular that the at least one coil winding (5) is arranged at least partially in the back taper (15).

4. Coil assembly (1) according to one of claims 1 to 3, **characterized in that** the coil assembly (1) has a sheathing (17) that at least partially closes off the exterior (16), in particular that the sheathing (17) is made of a ceramic material and is manufactured using an additive manufacturing process, and further in particular that the sheathing (17) is formed integrally with the coil body (4).

5. Coil assembly (1) according to one of claims 1 to 4, **characterized in that** the coil assembly (1) has a fastening element (18) for fastening the coil assembly (1) to a component (10) of a flow meter (2), in particular that the fastening element (18) is made of a ceramic material and is produced by means of an additive manufacturing process, further in particular that the fastening element (18) is formed integrally with the coil body (4) and/or - if a sheathing (17) is provided - with the sheathing (17).

6. Coil assembly (1) according to one of claims 1 to 5, **characterized in that** the at least one coil winding (5) is produced by an additive manufacturing process, in particular wherein the at least one coil winding (5) is made of a conductive ceramic.

7. Method (100) for producing a coil assembly for a flowmeter, wherein the coil assembly has a coil body and at least one coil winding made of an electrically conductive material,
**characterized in**
**that** in a provisioning step (101), a 3D model of at least the coil body is provided,
in the provisioning step (101), a 3D model of the coil body is provided, in which the coil body is at least partially hollow inside, in that the material inside the coil body is at least partially arranged in an irregular structure and/or at least partially arranged in a regular structure,
and in that the following process steps are also carried out:
• in a coil body printing step (102), the coil body is produced from a ceramic material by means of an additive manufacturing process based on the 3D model, and in a winding step (103), the at least one coil winding is arranged around the coil body,
or
• in a coil winding provisioning step (103'), the at least one coil winding is provided, and in a coil body printing step (102), the coil body is produced at least partially in the inner area of the provided coil winding using an additive manufacturing process based on the 3D model from a ceramic material, such that the provided coil winding is arranged around the printed coil body.

8. Method (100) according to claim 7, **characterized in that** the coil body printing step (102) is divided into at least a first partial printing step (102') and a second partial printing step (102"), that in the first partial printing step (102') a first coil body part is manufactured, that in the winding step (103) the at least one coil winding is arranged around the first coil body part, and that in a second partial printing step (102") the second coil body part is produced, in particular in such a way that it is formed integrally with the first coil body part.

9. Method (100) according to claim 7 or 8, **characterized in that** in a coil winding model provisioning step (104), a 3D model of the at least one coil winding is provided, and that in a coil winding printing step (105), the at least one coil winding is produced from an electrically conductive material, in particular from an electrically conductive ceramic, by means of an additive manufacturing process based on the 3D model.

10. Method (100) according to one of claims 7 to 9, wherein the coil arrangement has a sheathing that is at least partially closed to the outside, **characterized in that**, in the provisioning step (101), a 3D model of the sheathing is provided and, in a sheathing printing step (106), the sheathing is produced from a ceramic material by means of an additive manufacturing process based on the 3D model, in particular that the coil body printing step (102) or at least the first partial printing step (102') of the coil body printing step (102) and the sheathing printing step (106) are carried out simultaneously, in particular in such a way that the coil body and the sheathing are implemented in one piece.

11. Method (100) according to one of claims 7 to 10, wherein the coil arrangement has at least one fastening element for fastening the coil arrangement to a component of a flowmeter, **characterized in that** a 3D model of the fastening element is provided in the provisioning step (101) and that in a fastening element printing step (107), the fastening element is produced from a ceramic material by means of an additive manufacturing process based on the 3D model, in particular that the fastening element printing step (197) and the coil body printing step (102) and/or the sheathing printing step (106) are performed simultaneously, in particular in such a way that the fastening element and the coil body and/or the sheathing are implemented in one piece.

## Revendications

1. Ensemble bobine (1) pour un débitmètre (2), en particulier un débitmètre Coriolis ou un débitmètre magnétique-inductif, comportant une bobine (3), la bobine (3) comportant un corps de bobine (4) et au moins une spire de bobine (5) constituée d'un matériau électriquement conducteur, le corps de bobine (4) étant réalisé à partir d'un matériau céramique et le corps de bobine (4) étant fabriqué au moyen d'un procédé de fabrication additif,
dans lequel
le corps de bobine (4) est conçu, dans son intérieur (11) délimité par les parois de corps de bobine (6), au moins partiellement sous forme creuse, **caractérisé en ce que** le matériau se trouvant à l'intérieur (11) du corps de bobine (4) est agencé au moins partiellement dans une structure irrégulière et/ou est agencé au moins partiellement dans une structure régulière (7).

2. Ensemble bobine (1) selon la revendication 1, **caractérisé en ce que** le corps de bobine (4) présente au moins partiellement dans son intérieur (11) une porosité ouverte et/ou une porosité fermée et/ou une structure en colonnes (10) et/ou une structure en nervures et/ou une structure en grille (12).

3. Ensemble bobine (1) selon la revendication 1 ou 2, **caractérisé en ce que** le corps de bobine (4) présente au moins une contre-dépouille (15), en particulier **en ce que** ladite au moins une spire de bobine (5) est agencée au moins partiellement dans la contre-dépouille (15).

4. Ensemble bobine (1) selon l'une des revendications 1 à 3, **caractérisé en ce que** l'ensemble bobine (1) comporte une gaine (17) fermant au moins partiellement l'espace extérieur (16), en particulier **en ce que** la gaine (17) est réalisée à partir d'un matériau céramique et fabriquée au moyen d'un procédé de fabrication additif, plus particulièrement **en ce que** la gaine (17) est conçue d'un seul tenant avec le corps de bobine (4).

5. Ensemble bobine (1) selon l'une des revendications 1 à 4, **caractérisé en ce que** l'ensemble bobine (1) comporte un élément de fixation (18) destiné à la fixation de l'ensemble bobine (1) sur un composant (10) d'un débitmètre (2), en particulier **en ce que** l'élément de fixation (18) est réalisé à partir d'un matériau céramique et fabriqué au moyen d'un procédé de fabrication additif, plus particulièrement **en ce que** l'élément de fixation (18) est conçu d'un seul tenant avec le corps de bobine (4) et/ou - si une gaine (17) est prévue - avec la gaine (17).

6. Ensemble bobine (1) selon l'une des revendications 1 à 5, **caractérisé en ce que** ladite au moins une spire de bobine (5) est fabriquée par un procédé de fabrication additif, ladite au moins une spire de bobine (5) étant en particulier fabriquée à partir d'une céramique conductrice.

7. Procédé (100) de fabrication d'un ensemble bobine pour un débitmètre, l'ensemble bobine comportant un corps de bobine et au moins une spire de bobine constituée d'un matériau électriquement conducteur,
**caractérisé**
**en ce que**, lors d'une étape de fourniture (101), un modèle 3D d'au moins le corps de bobine est fourni,
**en ce que**, lors de l'étape de fourniture (101), un modèle 3D du corps de bobine est fourni, dans lequel le corps de bobine est conçu au moins partiellement sous forme creuse dans son intérieur, en ce sens que le matériau se trouvant à l'intérieur du corps de bobine est agencé au moins partiellement dans une structure irrégulière et/ou est agencé au moins partiellement dans une structure régulière,
et **en ce que** les étapes de procédé suivantes sont en outre exécutées :
• lors d'une étape d'impression de corps de bobine (102), le corps de bobine est fabriqué au moyen d'un procédé de fabrication additif à partir d'un matériau céramique sur la base du modèle 3D et en ce que, lors d'une étape d'enroulement (103), ladite au moins une spire de bobine est agencée autour du corps de bobine,
ou
• **en ce que**, lors d'une étape de fourniture de spire de bobine (103'), ladite au moins une spire de bobine est fournie et en ce que lors d'une étape d'impression de corps de bobine (102), le corps de bobine est imprimé au moyen d'un procédé de fabrication additif à partir d'un matériau céramique au moins partiellement dans la zone intérieure de la spire de bobine fournie sur la base du modèle 3D, de telle sorte que la spire de bobine fournie soit agencée autour du corps de bobine imprimé.

8. Procédé (100) selon la revendication 7, **caractérisé en ce que** l'étape d'impression de corps de bobine (102) est subdivisée en au moins une première sous-étape d'impression (102') et une deuxième sous-étape d'impression (102"), **en ce que**, lors de la première sous-étape d'impression (102'), une première partie de corps de bobine est fabriquée, **en ce que**, lors de l'étape d'enroulement (103), ladite au moins une spire de bobine est agencée autour de la première partie de corps de bobine, et **en ce que**, lors d'une deuxième sous-étape d'impression (102"), la deuxième partie de corps de bobine est fabriquée, en particulier de telle sorte qu'elle soit conçue d'un seul tenant avec la première partie de corps de bobine.

9. Procédé (100) selon la revendication 7 ou 8, **caractérisé en ce que**, lors d'une étape de fourniture de modèle de spire de bobine (104), un modèle 3D de ladite au moins une spire de bobine est fourni, et **en ce que** lors d'une étape d'impression de spire de bobine (105), ladite au moins une spire de bobine est fabriquée au moyen d'un procédé de fabrication additif à partir d'un matériau électriquement conducteur, en particulier d'une céramique électriquement conductrice, sur la base du modèle 3D.

10. Procédé (100) selon l'une des revendications 7 à 9, dans lequel l'ensemble bobine comporte une gaine fermant au moins partiellement l'espace extérieur, **caractérisé en ce que**, lors de l'étape de fourniture (101), un modèle 3D de la gaine est fourni et **en ce que**, lors d'une étape d'impression de gaine (106), la gaine est fabriquée au moyen d'un procédé de fabrication additif à partir d'un matériau céramique sur la base du modèle 3D, en particulier **en ce que** l'étape d'impression de corps de bobine (102) ou au moins la première sous-étape d'impression (102') de l'étape d'impression de corps de bobine (102) et l'étape d'impression de gaine (106) sont exécutées simultanément, plus particulièrement de telle sorte que le corps de bobine et la gaine soient réalisés d'un seul tenant.

11. Procédé (100) selon l'une des revendications 7 à 10, dans lequel l'ensemble bobine comporte au moins un élément de fixation destiné à la fixation de l'ensemble bobine sur un composant d'un débitmètre, **caractérisé en ce que**, lors de l'étape de fourniture (101), un modèle 3D de l'élément de fixation est fourni et **en ce que**, lors d'une étape d'impression d'élément de fixation (107), l'élément de fixation est fabriqué au moyen d'un procédé de fabrication additif à partir d'un matériau céramique sur la base du modèle 3D, en particulier **en ce que** l'étape d'impression d'élément de fixation (197) et l'étape d'impression de corps de bobine (102) et/ou l'étape d'impression de gaine (106) s'effectuent simultanément, plus particulièrement de telle sorte que l'élément de fixation et le corps de bobine et/ou la gaine soient réalisés d'un seul tenant.
